# EUROPEAN PATENT SPECIFICATION

(11) **EP 4 098 393 B1**
(45) Date of publication and mention of the grant of the patent: **17.09.2025**
(21) Application number: 21843092.4
(22) Date of filing: 08.07.2021
(51) Int. Cl.: B23K 33/00, B23K 37/04, B23K 31/12, B21D 5/04, H01M 10/04, H01M 50/531, B23K 101/38, H01M 50/516

(54) **APPARATUS FOR BENDING AND WELDING ELECTRODE LEAD, AND METHOD FOR WELDING ELECTRODE LEAD USING SAME**
VORRICHTUNG ZUM BIEGEN UND SCHWEISSEN VON ELEKTRODENLEITUNGEN UND VERFAHREN ZUM SCHWEISSEN VON ELEKTRODENLEITUNGEN DAMIT
APPAREIL DE PLIAGE ET DE SOUDAGE DE FIL D'ÉLECTRODE ET PROCÉDÉ DE SOUDAGE DE FIL D'ÉLECTRODE LE METTANT EN OEUVRE

(30) Priority: 15.07.2020 KR 20200087736
(43) Date of publication of application: 07.12.2022
(73) Proprietor: LG Energy Solution, Ltd., Seoul 07335 (KR)
(72) Inventor: PARK, Jin Woo, Daejeon (KR); KIM, Tae Geun, Daejeon (KR); LEE, kang Il, Daejeon (KR); BAE, Jae Hyun, Daejeon (KR)
(74) Representative: Plasseraud IP
(86) International application number: PCT/KR2021/008746
(87) International publication number: WO 2022/014954

(56) References cited:
- CN-A- 109 752 386
- JP-A- 2002 237 289
- JP-A- 2018 006 217
- KR-A- 20170 103 332
- KR-B1- 101 697 698

## Description

### [Technical Field]

This application claims the benefit of priority to Korean Patent Application No. 2020-0087736 filed on July 15, 2020.

The present invention relates to an electrode lead bending and welding apparatus and an electrode lead welding method using the same, and more particularly to an electrode lead bending and welding apparatus configured to have a structure capable of performing welding after evaluation of a bent state of an electrode lead in order to electrically connect the electrode lead and a busbar to each other.

### [Background Art]

With rapid functional improvement, such as safety improvement and capacity increase, of a lithium secondary battery, which is capable of being charged and discharged, kinds of devices to which the lithium secondary battery is applied have gradually increased.

For example, the lithium secondary battery has been widely used as an energy source for wireless mobile devices, which are small multifunctional products, and wearable devices, which are worn on bodies, and has also been used as an energy source for electric vehicles and hybrid electric vehicles presented as alternatives to existing gasoline and diesel vehicles, which cause air pollution.

The lithium secondary battery applied to electric vehicles needs high-output and high-capacity characteristics. Accordingly, a plurality of battery cells is connected to each other in series and/or in parallel in order to constitute a battery module or a battery pack.

In order to electrically connect the plurality of battery cells to each other, as described above, a method of coupling electrode leads of the plurality of battery cells to a busbar may be used.

For example, the electrode leads extend through slits of the busbar and are then bent so as to come into surface contact with the busbar. In this state, the busbar and the battery cells are moved to a welding jig, and welding is performed. In a process of transferring the busbar and the battery cells to the welding jig and a process of seating the busbar and the battery cells on the welding jig, however, a gap is easily formed between the busbar and each of the electrode leads at the portion at which the busbar and each of the electrode leads will be welded.

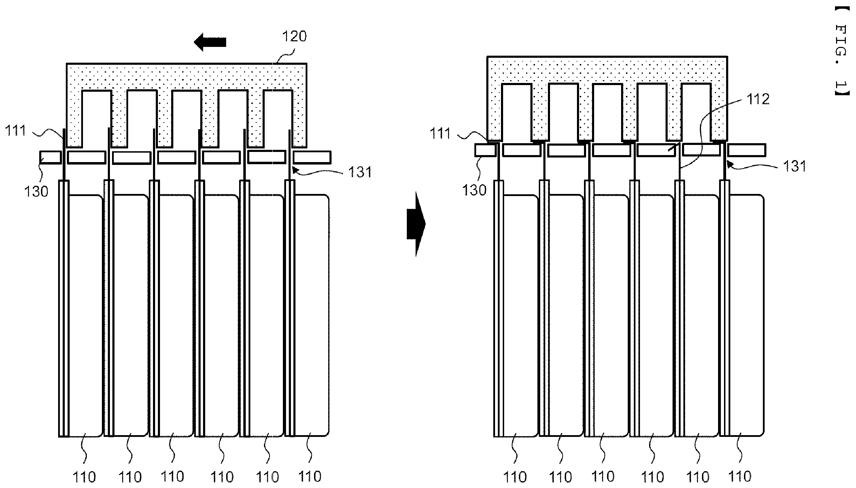

In connection therewith, FIG. 1 is a front view showing electrode leads having welding defects generated when a conventional bending apparatus is used.

Referring to FIG. 1, a plurality of pouch-shaped battery cells 110 is disposed in close contact with each other, and electrode leads 111 protrude upwards through slits 131 of a busbar 130.

In a state of being disposed at one side of each of the electrode leads 111 so as to be in contact with the busbar 130, the electrode lead bending apparatus 120 bends the electrode leads 111 while being moved to the right.

During this process, however, the electrode lead may be bent more than 90 degrees, as indicated by an electrode lead 112. Alternatively, in a process in which the bent electrode leads are transferred to the welding jig (not shown) together with the busbar, the bent portions of the electrode leads may be broken or further bent, whereby the size of the weld surface between the busbar and each of the electrode leads may be reduced.

In the case in which a gap is formed at the weld portion, as described above, force of adhesion between the electrode leads and the busbar may be reduced, whereby welding defects may occur.

In connection therewith, Patent Document 1 discloses a battery module production method of disposing a plurality of busbars so as to be adjacent to electrode leads provided at a plurality of battery cells, pressing the electrode leads using a welding jig such that the electrode leads come into contact with the busbars, respectively, and welding the electrode leads and the busbars to each other through openings formed in the welding jig.

In the invention of Patent Document 1, the electrode leads are bent using the welding jig, and welding is performed through the openings formed in the welding jig. However, welding is performed without determination as to whether a bent state of each of the electrode leads is good. As a result, welding defects are inspected only after welding. Consequently, it is difficult to prevent occurrence of welding defects.

Patent Document 2 discloses a secondary battery cell lead tab bending apparatus that presses a protruding lead tab of a secondary battery to one side in order to bend the lead tab.

The bending apparatus of Patent Document 2 is capable of rapidly and accurately bending a plurality of lead tabs but cannot solve a problem in that the bent lead tabs are dislocated while being transferred to a welding jig.

Patent Document 3 discloses a jig assembly for welding including a tilting portion and an elastic member in order to maintain close contact between a cell lead, which is a welding base material, and a contact member even though flatness of the cell lead is changed.

Patent Document 3 uses the structure in which a welding jig is tilted in consideration of the case in which flatness of the bent cell lead is changed but does not disclose technology of bending the cell lead.

Therefore, there is a high necessity for technology capable of rapidly bending a plurality of electrode leads in order to electrically connect the plurality of electrode leads to a busbar, securing a wide weld surface between each of the plurality of electrode leads and the busbar, and inspecting a possibility of welding defects in a step before welding, thereby reducing welding defects.

### (Prior Art Documents)

(Patent Document 1) Korean Patent Application Publication No. 2018-0129170 (2018.12.05)
(Patent Document 2) Korean Registered Patent Publication No. 2015898 (2019.08.23)
(Patent Document 3) Korean Patent Application Publication No. 2018-0082914 (2018.07.19)
JP 2018 006217 A discloses the preamble of claim 1, wherein the welding between the electrode lead and the busbar is performed in a state in which the electrode lead is bent by the bending portion.

### [Disclosure]

### [Technical Problem]

The present invention has been made in view of the above problems, and it is an object of the present invention to provide an electrode lead bending and welding apparatus configured to have a structure capable of checking a bent state of an electrode lead before welding after bending the electrode lead, thereby preventing welding defects and an electrode lead welding method using the same.

### [Technical Solution]

In order to accomplish the above object, an electrode lead bending and welding apparatus according to the present invention includes a base portion movable in a vertical direction and a horizontal direction, a bending portion attached to the base portion in a state of extending downwards from the base portion, and a sensing portion attached to the bending portion and configured to be rotatable, wherein a welding between an electrode lead and a busbar is performed in the state in which the electrode lead is bent by the bending portion.

In the electrode lead bending and welding apparatus according to the present invention, the sensing portion may be configured to have a structure in which the sensing portion is attached to the bending portion in a state of being perpendicular to the lower surface of the bending portion before the electrode lead is bent by the bending portion and in which the sensing portion is rotated so as to be parallel with the lower surface of the bending portion when the electrode lead is bent.

In addition, the angle between the sensing portion and the lower surface of the bending portion may be measured to determine whether the bent state of the electrode lead is poor.

Alternatively, the angle between the sensing portion and the busbar may be measured to determine whether the bent state of the electrode lead is poor.

In the electrode lead bending and welding apparatus according to the present invention, the distance between the sensing portion and the busbar may be equal to the thickness of the electrode lead.

In the electrode lead bending and welding apparatus according to the present invention, the sensing portion may be coupled to the bending portion by an elastic member, and the sensing portion may return to a standby state due to elastic force of the elastic member after the welding of the electrode lead is finished.

The electrode lead bending and welding apparatus according to the present invention may further include a vision camera configured to inspect a welded state between the electrode lead and the busbar.

In the electrode lead bending and welding apparatus according to the present invention, the bending portion may be in the shape of a quadrangular pillar having a hollow formed therein, and a welding rod may be inserted through the hollow to perform the welding.

In the electrode lead bending and welding apparatus according to the present invention, a welding rod may be added on the lower surface of the bending portion.

In the electrode lead bending and welding apparatus according to the present invention, one bending portion having one sensing portion coupled thereto may be attached to the base portion to constitute a unit member, and a plurality of unit members may be assembled with each other.

In addition, the present invention provides an electrode lead welding method using the electrode lead bending and welding apparatus, the electrode lead welding method including (a) preparing battery cells and disposing the battery cells such that electrode leads extend through slits of a busbar, (b) disposing the bending portion of the electrode lead bending and welding apparatus at a first surface of each of the electrode leads, (c) bending the electrode leads, and (d) welding the bent electrode leads to the busbar.

The electrode lead welding method according to the present invention may further include determining whether the bent state of each of the electrode leads is poor before step (d).

In the electrode lead welding method according to the present invention, in step (b), the electrode lead bending and welding apparatus may be moved downwards, the sensing portion of the electrode lead bending and welding apparatus may extend through each of the slits of the busbar so as to be parallel with a direction in which the electrode leads protrude, and the lower surface of the bending portion of the electrode lead bending and welding apparatus may be disposed so as to be adjacent to the busbar.

In the electrode lead welding method according to the present invention, step (c) may be performed as a process of disposing the bending portion on a first surface of each of the electrode leads and horizontally moving the bending portion such that a second surface, which is a surface opposite the first surface, faces the busbar in parallel therewith.

In the electrode lead welding method according to the present invention, the sensing portion of the electrode lead bending and welding apparatus may be rotated 90 degrees in a first direction so as to be located at the outer surface of the busbar in response to a horizontal movement of the bending portion.

In the electrode lead welding method according to the present invention, after step (d), the sensing portion may be rotated 90 degrees in a second direction, which is a direction opposite the first direction, while becoming far away from the busbar, whereby the sensing portion may return to a standby state.

### [Advantageous Effects]

As is apparent from the above description, the present invention is configured to have a structure in which an electrode lead is welded to a busbar in a state in which the electrode lead is bent with omission of a process of transferring the electrode lead and the busbar to a welding jig and a process of mounting the electrode lead and the busbar to the welding jig, whereby it is possible to prevent dislocation of a portion to be welded in the transferring process and the mounting process.

In addition, since a sensing portion capable of sensing the bent state of the electrode lead is included, it is possible to determine whether welding defects will occur based on the external appearance of the sensing portion before the electrode lead is welded.

As described above, it is possible to detect the distance between the busbar and the electrode lead, which causes welding defects, in advance, whereby it is possible to improve production quality and to reduce cost due to defects.

In addition, it is possible to check, in advance, the maintenance cycle of the electrode lead bending and welding apparatus through the sensing portion.

### [Description of Drawings]

FIG. 1 is a front view showing electrode leads having welding defects generated when a conventional bending apparatus is used.
FIG. 2 is a front view showing a process in which an electrode lead bending and welding apparatus according to the present invention is used.
FIG. 3 is a perspective view showing the state in which the electrode lead bending and welding apparatus is disposed above a battery cell having an electrode lead extending through a busbar.
FIG. 4 is a perspective view of the electrode lead bending and welding apparatus of FIG. 3.
FIG. 5 is a perspective view of an electrode lead bending and welding apparatus according to an embodiment.
FIG. 6 is a perspective view of an electrode lead bending and welding apparatus according to another embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the accompanying drawings.

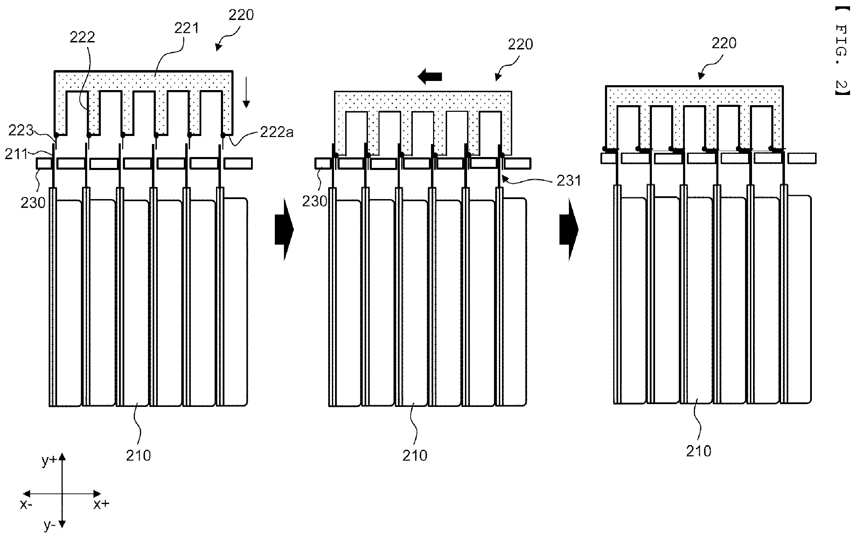

FIG. 2 is a front view showing a process in which an electrode lead bending and welding apparatus according to the present invention is used.

Referring to FIG. 2, the electrode lead bending and welding apparatus 220 according to the present invention includes a base portion 221 movable in a vertical direction (a y-axis direction) and a horizontal direction (an x-axis direction), a bending portion 222 attached to the base portion 221 in a state of extending downwards, and a sensing portion 223 attached to the bending portion 222 so as to be rotatable, wherein welding between an electrode lead 211 and a busbar 230 is performed in the state in which the electrode lead 211 is bent by the bending portion 222.

An electrode lead welding method according to an embodiment includes (a) a step of preparing battery cells and disposing the battery cells such that electrode leads extend through slits of a busbar, (b) a step of disposing the bending portion of the electrode lead bending and welding apparatus at first surfaces of the electrode leads, (c) a step of bending the electrode leads, and (d) a step of welding the bent electrode leads to the busbar.

Referring back to FIG. 2, pouch-shaped battery cells 210 are arranged in close contact with each other such that electrode leads 211 of the battery cells 210 protrude upwards, and the busbar 230 is disposed above the battery cells 210 such that the electrode leads 211 extend through slits 231 of the busbar 230.

The electrode lead bending and welding apparatus 220 is moved downwards such that the bending portion 222 is disposed at a first surface of the electrode lead, which is any one of opposite surfaces of the electrode lead. At this time, the sensing portion 223 of the electrode lead bending and welding apparatus 220 extends through the slit 231 of the busbar 230 in a state of extending downwards so as to be parallel with a direction in which the electrode lead protrudes and to face the battery cell 230. The lower surface 222a of the bending portion is disposed so as to be adjacent to the busbar 230.

When the base portion 221 is moved in an x-direction such that the bending portion 222 is horizontally moved, the electrode lead 221 is bent into a " 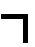 " shape such that a second surface of the electrode lead, which is a surface opposite the first surface, faces the upper surface of the busbar 230 in parallel therewith. The portion at which the bent electrode lead comes into surface contact with the busbar becomes a weld portion. In order to secure force of coupling between the busbar and the electrode lead, it is necessary to secure the weld portion as widely as possible.

The sensing portion 223 is attached to the bending portion 222 in a state of being perpendicular to the lower surface 222a of the bending portion before the electrode lead 211 is bent. With horizontal movement of the bending portion 222, the sensing portion 223 is rotated 90 degrees in a first direction, whereby the sensing portion is located at the upper surface of the busbar 230. That is, the sensing portion 223 is configured to have a structure in which the sensing portion is rotated so as to be parallel with the lower surface 222a of the bending portion when the electrode lead 211 is bent.

The sensing portion 223 is coupled to the bending portion 222 using an elastic member. When the electrode lead bending and welding apparatus becomes far away from the busbar after welding of the electrode lead 211 is finished, the sensing portion 223 may be rotated 90 degrees in a second direction, which is a direction opposite the first direction, by elastic force of the elastic member, whereby the sensing portion may return to a standby state.

The standby state means a state before the sensing portion is rotated 90 degrees in the first direction.

For example, the elastic member may include a spring or a rubber band.

When the electrode lead 221 is bent 90 degrees in the first direction, the distance between the busbar 230 and the bending portion 222 becomes equal to the thickness of the electrode lead 211.

In the present invention, a vision camera configured to inspect a welded state between the electrode lead 211 and the busbar 230 is included. It is possible to determine whether the bent state of the electrode lead is normal in a step before the bent electrode lead is welded to the busbar.

Specifically, the vision camera may measure the distance between the bent part of the electrode lead and the busbar, may measure the angle between the sensing portion and the lower surface of the bending portion, or may measure the angle between the sensing portion and the busbar in order to determine whether the bent state of the electrode lead is poor.

Consequently, in the case in which the thickness of the sensing portion is less than the thickness of the electrode lead or in the case in which the sensing portion is coupled at the position at which the distance between the busbar and the bending portion is not affected, e.g. in the case in which the distance between the busbar 230 and the bending portion 222 is equal to the thickness of the electrode lead, which means the state in which the electrode lead 221 is in tight contact with the busbar, a weld surface may be formed to the maximum extent, whereby a possibility of welding defects may be greatly reduced.

For example, in the case in which the distance between the busbar 230 and the lower surface 222a of the bending portion is measured to be 0.4 mm and 0.2 mm when a positive electrode lead that is made of an aluminum material and has a thickness of 0.4 mm is used and when a negative electrode lead that is made of an copper material and has a thickness of 0.2 mm is used, respectively, it can be seen that the electrode lead is bent 90 degrees and is disposed at the upper surface of the busbar.

Also, in the case in which the angle between the sensing portion 223 and the lower surface 222a of the bending portion is 0 degrees and in the case in which the angle between the sensing portion 223 and the busbar 230 is 0 degrees, it can be seen that the bent state of the electrode lead is normal. On the other hand, in the case in which the angle is not 0 degrees, it can be seen that the bent state of the electrode lead is poor.

In the case in which the bent state of the electrode lead is poor, as described above, the process of bending the electrode lead may be performed again such that the contact surface between the electrode lead and the busbar becomes the maximum.

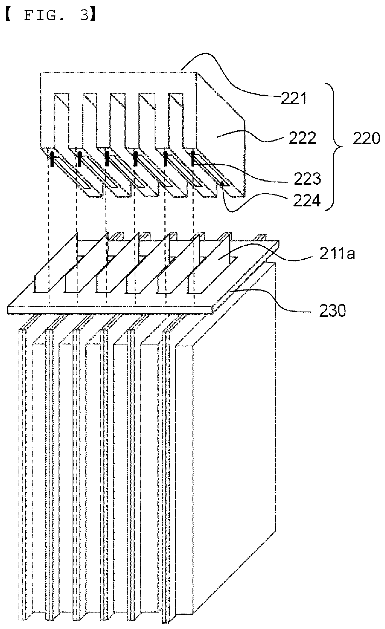

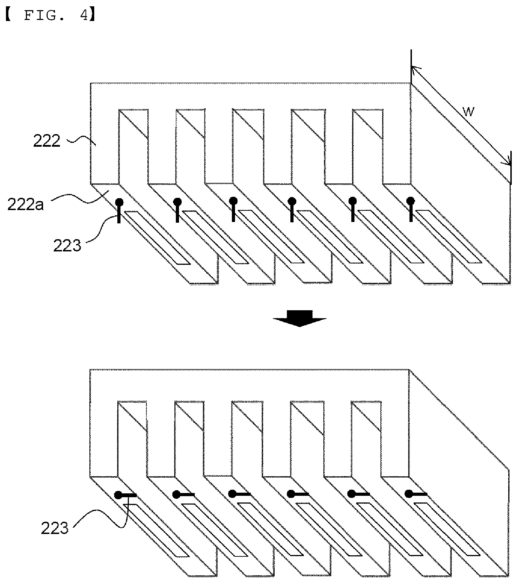

FIG. 3 is a perspective view showing the state in which the electrode lead bending and welding apparatus is disposed above the battery cell having the electrode lead extending through the busbar, and FIG. 4 is a perspective view of the electrode lead bending and welding apparatus of FIG. 3.

Referring to FIG. 3, the electrode lead bending and welding apparatus 220, which is also shown in FIG. 2, includes a plurality of bending portions 222 extending downwards from the base portion 221, and it is shown that the bending portions 222 are disposed on the first surfaces 211a of the electrode leads 211 when the electrode lead bending and welding apparatus is disposed above the busbar 230.

The bending portion 222 is formed in the shape of a quadrangular pillar having a hollow 224 formed therein, and the hollow 224 is formed from the base portion 221 so as to extend through the bending portion 222. Consequently, a welding rod may be inserted through the hollow 224 in order to perform welding. Welding between the electrode lead 211 and the busbar 230 may be performed in the state in which the bending portion presses the electrode lead.

Referring to FIG. 4, the sensing portion 223 is mounted in the slit of the busbar in a state of extending downwards so as to be perpendicular to the lower surface 222a of the bending portion, and when the bending portion 222 is moved in order to bend the electrode lead, the sensing portion 223 is rotated 90 degrees, whereby the sensing portion becomes parallel with the lower surface 222a of the bending portion.

That is, in the case in which the sensing portion 223 is attached to the lower surface 222a of the bending portion, as shown in FIG. 4, the electrode lead may be bent in the state in which the sensing portion 223 is in tight contact with the electrode lead.

Consequently, the sensing portion 223 is rotated to the same angle as the bending angle of the electrode lead 211. In the case in which the angle of the sensing portion 223 relative to the lower surface 222a of the bending portion is not 0 degrees, therefore, it may be determined that the bent state of the electrode lead is poor.

In the case in which the sensing portion 223 is attached to the lower surface 222a of the bending portion, as described above, the electrode lead is bent in the state in which the electrode lead and the sensing portion 223 are in tight contact with each other. Even in the case in which the width of the busbar is less than the width w of the bending portion 222, therefore, it is possible to determine whether the bent state of the electrode lead is poor.

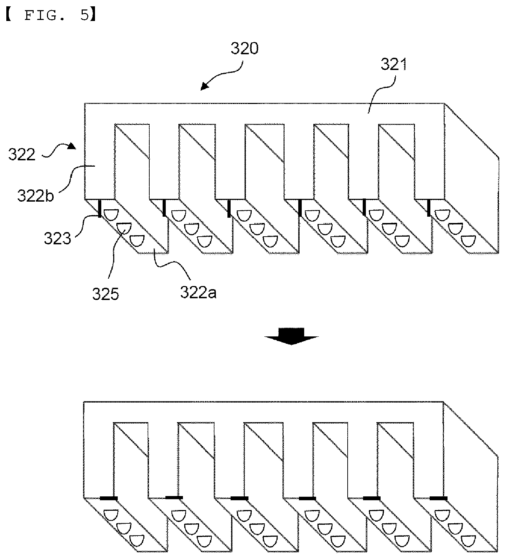

FIG. 5 is a perspective view of an electrode lead bending and welding apparatus according to an embodiment.

Referring to FIG. 5, in the electrode lead bending and welding apparatus 320, a bending portion 322 is attached to a base portion 321 so as to extend downwards therefrom, and a sensing portion 323 configured to be rotatable is attached to the lower part of a side surface 322b of the bending portion.

It is preferable for the sensing portion 323 to be located in the same plane as the lower surface 323a of the bending portion such that the angle between the sensing portion 323 and the lower surface 322a of the bending portion becomes 0 degrees when the sensing portion 323 is rotated.

In the case in which the sensing portion 323 is added to the side surface 323b of the bending portion, as described above, the electrode lead may be bent 90 degrees even though the thickness of the electrode lead is greater than the thickness of the sensing portion, and therefore it is possible to determine whether the bent state of the electrode lead is poor.

Unlike FIG. 4 showing that the hollow 224 is formed in the bending portion 222, a welding rod 325 may be added to the lower surface 322a of the bending portion 322. The lower end of the welding rod 325 may protrude farther than the lower surface 322a of the bending portion or may be disposed in the same plane as the lower surface 322a of the bending portion.

Consequently, a welding process may be immediately and rapidly performed in the state in which the electrode lead is bent and pressed.

As shown in FIG. 4, three welding rods are formed at each bending portion. However, the present invention is not limited thereto.

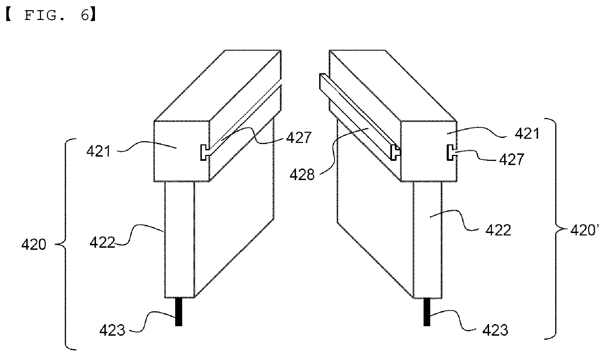

FIG. 6 is a perspective view of an electrode lead bending and welding apparatus according to another embodiment.

Referring to FIG. 6, unit members 420 and 420' of the electrode lead bending and welding apparatus may each be configured such that one bending portion 422 having one sensing portion 423 coupled thereto is attached to a base portion 421, and individual unit members may be coupled to each other, whereby a plurality of unit members is assembled with each other.

A concave portion 427 is formed in the base portion 421 of the unit member 420, and a protruding portion 428 formed in a shape corresponding to the shape of the concave portion 427 of the unit member 420 so as to be coupled thereto by sliding fastening is formed on the unit member 420' . In addition, the unit member 420' is provided with a concave portion 427, through which the unit member 420' is coupled to another unit member.

Although not shown in FIG. 6, the unit member may be configured such that a welding rod is inserted through a hollow formed from the base portion so as to extend through the bending portion in order to perform welding, as shown in FIGS. 3 and 4, or may be configured such that a welding rod protrudes from the lower surface of the bending portion, as shown in FIG. 5.

The present invention relates to an apparatus for bending and welding electrode leads in the state in which a plurality of battery cells is arranged in tight contact with each other. In the case in which the apparatus is configured to have a structure capable of coupling a plurality of unit members to each other, as described above, it is possible to selectively couple and separate the unit members to and from each other depending on the number of pouch-shaped battery cells.

In the case in which the electrode lead bending and welding apparatus according to the present invention is used, as described above, it is possible to inspect bending defects of electrode leads before welding work, whereby it is possible to prevent occurrence of welding defects.

Those skilled in the art to which the present invention pertains will appreciate that various applications and modifications are possible within the category of the present invention as defined by the appended claims.

### (Description of Reference Symbols)

110, 210: Battery cells
111, 112, 211: Electrode leads
120: Electrode lead bending apparatus
130, 230: busbars
131, 231: Slits
211a: First surface
220, 320: Electrode lead bending and welding apparatuses
221, 321, 421: Base portions
222, 322, 422: Bending portions
222a, 322a: Lower surfaces of bending portions
223, 323, 423: Sensing portions
224: Hollow
322b: Side surface of bending portion
325: Welding rod
420, 420': Unit members
427: Concave portion
428: Protruding portion
w: Width of bending portion

### [Industrial Applicability]

As is apparent from the above description, the present invention is configured to have a structure in which an electrode lead is welded to a busbar in a state in which the electrode lead is bent with omission of a process of transferring the electrode lead and the busbar to a welding jig and a process of mounting the electrode lead and the busbar to the welding jig, whereby it is possible to prevent dislocation of a portion to be welded in the transferring process and the mounting process.

In addition, since a sensing portion capable of sensing the bent state of the electrode lead is included, it is possible to determine whether welding defects will occur based on the external appearance of the sensing portion before the electrode lead is welded.

As described above, it is possible to detect the distance between the busbar and the electrode lead, which causes welding defects, in advance, whereby it is possible to improve production quality and to reduce cost due to defects.

In addition, it is possible to check, in advance, the maintenance cycle of the electrode lead bending and welding apparatus through the sensing portion.

## Claims

1. An electrode lead bending and welding apparatus (220, 320) comprising:
a base portion (221, 321, 421) movable in a vertical direction and a horizontal direction;
a bending portion (222, 322, 422) attached to the base portion (221, 321, 421) in a state of extending downwards from the base portion(221, 321, 421); the apparatus being **characterised by**:
a sensing portion (223, 323, 423) attached to the bending portion (222, 322, 422) and configured to be rotatable;
wherein the bending portion (222, 322, 422) is in a shape of a quadrangular pillar having a hollow (224) formed therein, and
a welding rod (325) is inserted through the hollow (224) for performing the welding between an electrode lead (211) and a busbar (230) in a state in which the electrode lead (211) is bent by the bending portion(222, 322, 422); or
wherein a welding rod (325) is added on a lower surface (222a, 322a) of the bending portion (222, 322, 422) for performing the welding between an electrode lead (211) and a busbar (230) in a state in which the electrode lead (211) is bent by the bending portion (222, 322, 422).

2. The electrode lead bending and welding apparatus (220, 320) according to claim 1, wherein the sensing portion (223, 323, 423) is configured to have a structure in which:
the sensing portion (223, 323, 423) is attached to the bending portion (222, 322, 422) in a state of being perpendicular to a lower surface (222a, 322a) of the bending portion (222, 322, 422) before the electrode lead (211) is bent by the bending portion (222, 322, 422); and
the sensing portion (223, 323, 423) is rotated so as to be parallel with the lower surface (222a, 322a) of the bending portion (222, 322, 422) when the electrode lead (211) is bent.

3. The electrode lead bending and welding apparatus (220, 320) according to claim 1, wherein in use, when the sensing portion (223, 323, 423) is rotated so as to be parallel with the lower surface (222a, 322a) of the bending portion (222, 322, 422) when an electrode lead (211) is bent, a distance between the sensing portion (223, 323, 423) and the busbar (230) is equal to a thickness of the electrode lead (211).

4. The electrode lead bending and welding apparatus (220, 320) according to claim 1, wherein the sensing portion (223, 323, 423) is coupled to the bending portion (222, 322, 422) by an elastic member, such that
the sensing portion (223, 323, 423) returns tc a standby state due to elastic force of the elastic member after the welding of the electrode lead (211) is finished.

5. The electrode lead bending and welding apparatus (220, 320) according to claim 1, further comprising a vision camera configured to inspect a welded state between the electrode lead (211) and the busbar (230).

6. The electrode lead bending and welding apparatus (220, 320) according to claim 1, wherein one bending portion (222, 322, 422) having one sensing portion (223, 323, 423) coupled thereto is attached to the base (221, 321, 421) portion to constitute a unit member (420, 420'), and
wherein a plurality of unit members (420, 420') are assembled with each other.

7. An electrode lead welding method using the electrode lead bending and welding apparatus (220, 320) according to any one of claims 1 to 6, the electrode lead welding method comprising:
(a) preparing battery cells (210) and disposing the battery cells (210) such that electrode leads (211) extend through slits (231) of a busbar (230);
(b) disposing the bending portion (222, 322, 422) of the electrode lead bending and welding apparatus (220, 320) at a first surface (211a) of each of the electrode leads (211);
the electrode lead bending and welding apparatus (220, 320) is moved downwards,
the sensing portion (223, 323, 423) of the electrode lead bending and welding apparatus (220, 320) extends through each of the slits (231) of the busbar (230) so as to be parallel with a direction in which the electrode leads (211) protrude, and
the lower surface (222a, 322a) of the bending portion (222, 322, 422) of the electrode lead bending and welding apparatus (220, 320) is disposed so as to be adjacent to the busbar (230);
(c) bending the electrode leads (211) by disposing the bending portion (222, 322, 422) on a first surface (211a) of each of the electrode leads (211) and horizontally moving the bending portion (222, 322, 422) such that a second surface, which is a surface opposite the first surface (211a), faces the busbar (230) in parallel therewith; and
(d) welding the bent electrode leads (211) to the busbar (230).

8. The electrode lead welding method according to claim 7, further comprising determining whether a bent state of each of the electrode leads (211) is poor before step (d).

9. The electrode lead welding method according to claim 7, wherein the sensing portion (223, 323, 423) of the electrode lead bending and welding apparatus (220, 320) is rotated 90 degrees in a first direction so as to be located at an outer surface of the busbar (230) in response to a horizontal movement of the bending portion (222, 322, 422), and
wherein, after step (d), the sensing portion (223, 323, 423) is rotated 90 degrees in a second direction, which is a direction opposite the first direction, while becoming far away from the busbar (230), whereby the sensing portion (223, 323, 423) returns to a standby state.

10. The electrode lead welding method according to claim 7, wherein an angle between the sensing portion (223, 323, 423) and the lower surface (222a, 322a) of the bending portion (222, 322, 422) is measured with a vision camera configured to inspect a welded state between the electrode lead (211) and the busbar (230), for determining whether a bent state of the electrode lead (211) is poor.

11. The electrode lead welding method according to claim 7, wherein an angle between the sensing portion (223, 323, 423) and the busbar (230) is measured with a vision camera configured to inspect a welded state between the electrode lead (211) and the busbar (230), for determining whether a bent state of the electrode lead (211) is poor.

## Patentansprüche

1. Elektrodenleitungs-Biege- und Schweißvorrichtung (220, 320), umfassend:
einen Basisabschnitt (221, 321, 421), welcher in einer vertikalen Richtung und einer horizontalen Richtung beweglich ist;
einen Biegeabschnitt (222, 322, 422), welcher in einem Zustand, in welchem er sich von dem Basisabschnitt (221, 321, 421) nach unten erstreckt, an dem Basisabschnitt (221, 321, 421) angebracht ist; wobei die Vorrichtung **gekennzeichnet ist durch**:
einen Erfassungsabschnitt (223, 323, 423), welcher an dem Biegeabschnitt (222, 322, 422) angebracht ist und dazu eingerichtet ist, drehbar zu sein;
wobei der Biegeabschnitt (222, 322, 422) in einer Form eines viereckigen Pfeilers vorliegt, welcher einen darin gebildeten Hohlraum (224) aufweist, und
ein Schweißdraht (325) zum Durchführen des Schweißens zwischen einer Elektrodenleitung (211) und einer Sammelschiene (230) in einem Zustand, in welchem die Elektrodenleitung (211) **durch** den Biegeabschnitt (222, 322, 422) gebogen ist, **durch** den Hohlraum (224) eingeführt ist; oder
wobei ein Schweißdraht (325) zum Durchführen des Schweißens zwischen einer Elektrodenleitung (211) und einer Sammelschiene (230) in einem Zustand, in welchem die Elektrodenleitung (211) **durch** den Biegeabschnitt (222, 322, 422) gebogen ist, an einer unteren Fläche (222a, 322a) des Biegeabschnitts (222, 322, 422) hinzugefügt ist.

2. Elektrodenleitungs-Biege- und Schweißvorrichtung (220, 320) nach Anspruch 1, wobei der Erfassungsabschnitt (223, 323, 423) dazu eingerichtet ist, eine Struktur aufzuweisen, in welcher:
der Erfassungsabschnitt (223, 323, 423) in einem Zustand, in welchem er senkrecht zu einer unteren Fläche (222a, 322a) des Biegeabschnitts (222, 322, 422) ist, an dem Biegeabschnitt (222, 322, 422) angebracht ist, bevor die Elektrodenleitung (211) durch den Biegeabschnitt (222, 322, 422) gebogen wird; und
der Erfassungsabschnitt (223, 323, 423) derart gedreht ist, dass er parallel zu der unteren Fläche (222a, 322a) des Biegeabschnitts (222, 322, 422) ist, wenn die Elektrodenleitung (211) gebogen ist.

3. Elektrodenleitungs-Biege- und Schweißvorrichtung (220, 320) nach Anspruch 1, wobei in Verwendung, wenn der Erfassungsabschnitt (223, 323, 423) derart gedreht ist, dass er parallel zu der unteren Fläche (222a, 322a) des Biegeabschnitts (222, 322, 422) ist, wenn eine Elektrodenleitung (211) gebogen wird, ein Abstand zwischen dem Erfassungsabschnitt (223, 323, 423) und der Sammelschiene (230) gleich einer Dicke der Elektrodenleitung (211) ist.

4. Elektrodenleitungs-Biege- und Schweißvorrichtung (220, 320) nach Anspruch 1, wobei der Erfassungsabschnitt (223, 323, 423) durch ein elastisches Element mit dem Biegeabschnitt (222, 322, 422) gekoppelt ist, so dass der Erfassungsabschnitt (223, 323, 423) aufgrund einer elastischen Kraft des elastischen Elements in einen Standby-Zustand zurückkehrt, nachdem das Schweißen der Elektrodenleitung (211) abgeschlossen worden ist.

5. Elektrodenleitungs-Biege- und Schweißvorrichtung (220, 320) nach Anspruch 1, ferner umfassend eine Vision-Kamera, welche dazu eingerichtet ist, einen geschweißten Zustand zwischen der Elektrodenleitung (211) und der Sammelschiene (230) zu inspizieren.

6. Elektrodenleitungs-Biege- und Schweißvorrichtung (220, 320) nach Anspruch 1, wobei ein Biegeabschnitt (222, 322, 422), welcher einen damit gekoppelten Erfassungsabschnitt (223, 323, 423) aufweist, an dem Basisabschnitt (221, 321, 421) angebracht ist, um ein Einheitselement (420, 420') zu bilden, und
wobei eine Mehrzahl von Einheitselementen (420, 420') miteinander zusammengefügt ist.

7. Elektrodenleitungsschweißverfahren, welches die Elektrodenleitungs-Biege- und Schweißvorrichtung (220, 320) nach einem der Ansprüche 1 bis 6 verwendet, wobei das Elektrodenleitungsschweißverfahren umfasst:
(a) Vorbereiten von Batteriezellen (210) und Anordnen der Batteriezellen (210) derart, dass sich Elektrodenleitungen (211) durch Schlitze (231) einer Sammelschiene (230) erstrecken;
(b) Anordnen des Biegeabschnitts (222, 322, 422) der Elektrodenleitungs-Biege- und Schweißvorrichtung (220, 320) an einer ersten Fläche (211a) jeder der Elektrodenleitungen (211);
wobei die Elektrodenleitungs-Biege- und Schweißvorrichtung (220, 320) nach unten bewegt wird,
wobei sich der Erfassungsabschnitt (223, 323, 423) der Elektrodenleitungs-Biege- und Schweißvorrichtung (220, 320) derart durch jeden der Schlitze (231) der Sammelschiene (230) erstreckt, dass er parallel zu einer Richtung ist, in welcher die Elektrodenleitungen (211) vorstehen, und
wobei die untere Fläche (222a, 322a) des Biegeabschnitts (222, 322, 422) der Elektrodenleitungs-Biege- und Schweißvorrichtung (220, 320) derart angeordnet wird, dass sie benachbart zu der Sammelschiene (230) ist;
(c) Biegen der Elektrodenleitungen (211) durch ein Anordnen des Biegeabschnitts (222, 322, 422) an einer ersten Fläche (211a) jeder der Elektrodenleitungen (211) und ein horizontales Bewegen des Biegeabschnitts (222, 322, 422) derart, dass eine zweite Fläche, welche eine der ersten Fläche (211a) entgegengesetzte Fläche ist, der Sammelschiene (230) parallel dazu zugewandt ist; und
(d) Schweißen der gebogenen Elektrodenleitungen (211) an die Sammelschiene (230).

8. Elektrodenleitungsschweißverfahren nach Anspruch 7, ferner umfassend ein Bestimmen, ob ein gebogener Zustand jeder der Elektrodenleitungen (211) mangelhaft ist, vor Schritt (d).

9. Elektrodenleitungsschweißverfahren nach Anspruch 7, wobei der Erfassungsabschnitt (223, 323, 423) der Elektrodenleitungs-Biege- und Schweißvorrichtung (220, 320) in Reaktion auf eine horizontale Bewegung des Biegeabschnitts (222, 322, 422) derart in einer ersten Richtung um 90 Grad gedreht wird, dass er sich an einer äußeren Fläche der Sammelschiene (230) befindet, und
wobei nach Schritt (d) der Erfassungsabschnitt (223, 323, 423) in einer zweiten Richtung, welche eine der ersten Richtung entgegengesetzte Richtung ist, um 90 Grad gedreht wird, während er weit von der Sammelschiene (230) entfernt wird, wodurch der Erfassungsabschnitt (223, 323, 423) in einen Standby-Zustand zurückkehrt.

10. Elektrodenleitungsschweißverfahren nach Anspruch 7, wobei ein Winkel zwischen dem Erfassungsabschnitt (223, 323, 423) und der unteren Fläche (222a, 322a) des Biegeabschnitts (222, 322, 422) mit einer Vision-Kamera gemessen wird, welche dazu eingerichtet ist, einen geschweißten Zustand zwischen der Elektrodenleitung (211) und der Sammelschiene (230) zu inspizieren, um zu bestimmen, ob ein gebogener Zustand der Elektrodenleitung (211) mangelhaft ist.

11. Elektrodenleitungsschweißverfahren nach Anspruch 7, wobei ein Winkel zwischen dem Erfassungsabschnitt (223, 323, 423) und der Sammelschiene (230) mit einer Vision-Kamera gemessen wird, welche dazu eingerichtet ist, einen geschweißten Zustand zwischen der Elektrodenleitung (211) und der Sammelschiene (230) zu inspizieren, um zu bestimmen, ob ein gebogener Zustand der Elektrodenleitung (211) mangelhaft ist.

## Revendications

1. Appareil de pliage et de soudage de fil d'électrode (220, 320) comprenant :
une partie de base (221, 321, 421) pouvant se déplacer dans une direction verticale et une direction horizontale ;
une partie de pliage (222, 322, 422) fixée à la partie de base (221, 321, 421) dans un état où elle s'étend vers le bas à partir de la partie de base (221, 321, 421) ; l'appareil étant **caractérisé par** :
une partie de détection (223, 323, 423) fixée à la partie de pliage (222, 322, 422) et configurée pour pouvoir tourner ;
dans lequel la partie de pliage (222, 322, 422) a la forme d'une colonne quadrangulaire ayant un creux (224) formé dans celle-ci, et
une baguette de soudage (325) est insérée à travers le creux (224) pour réaliser la soudure entre un fil d'électrode (211) et une barre omnibus (230) dans un état dans lequel le fil d'électrode (211) est plié par la partie de pliage (222, 322, 422) ; ou
dans lequel une baguette de soudage (325) est ajoutée sur une surface inférieure (222a, 322a) de la partie de pliage (222, 322, 422) pour réaliser la soudure entre un fil d'électrode (211) et une barre omnibus (230) dans un état dans lequel le fil d'électrode (211) est plié par la partie de pliage (222, 322, 422).

2. Appareil de pliage et de soudage de fil d'électrode (220, 320) selon la revendication 1, dans lequel la partie de détection (223, 323, 423) est configurée pour avoir une structure dans laquelle :
la partie de détection (223, 323, 423) est fixée à la partie de pliage (222, 322, 422) dans un état où elle est perpendiculaire à une surface inférieure (222a, 322a) de la partie de pliage (222, 322, 422) avant que le fil d'électrode (211) ne soit plié par la partie de pliage (222, 322, 422) ; et
la partie de détection (223, 323, 423) est tournée de manière à être parallèle à la surface inférieure (222a, 322a) de la partie de pliage (222, 322, 422) lorsque le fil d'électrode (211) est plié.

3. Appareil de pliage et de soudage de fil d'électrode (220, 320) selon la revendication 1, dans lequel, en utilisation, lorsque la partie de détection (223, 323, 423) est tournée de manière à être parallèle à la surface inférieure (222a, 322a) de la partie de pliage (222, 322, 422) lorsqu'un fil d'électrode (211) est plié, une distance entre la partie de détection (223, 323, 423) et la barre omnibus (230) est égale à une épaisseur du fil d'électrode (211).

4. Appareil de pliage et de soudage de fil d'électrode (220, 320) selon la revendication 1, dans lequel la partie de détection (223, 323, 423) est accouplée à la partie de pliage (222, 322, 422) par un élément élastique, de telle sorte que la partie de détection (223, 323, 423) revienne à un état de veille en raison d'une force élastique de l'élément élastique après que le soudage du fil d'électrode (211) a été terminé.

5. Appareil de pliage et de soudage de fil d'électrode (220, 320) selon la revendication 1, comprenant en outre une caméra de vision configurée pour inspecter un état soudé entre le fil d'électrode (211) et la barre omnibus (230).

6. Appareil de pliage et de soudage de fil d'électrode (220, 320) selon la revendication 1, dans lequel une partie de pliage (222, 322, 422) ayant une partie de détection (223, 323, 423) accouplée à celle-ci est fixée à la partie de base (221, 321, 421) pour constituer un élément unitaire (420, 420'), et
dans lequel une pluralité d'éléments unitaires (420, 420') sont assemblés les uns avec les autres.

7. Procédé de soudage de fil d'électrode utilisant l'appareil de pliage et de soudage de fil d'électrode (220, 320) selon l'une quelconque des revendications 1 à 6,
le procédé de soudage de fil d'électrode comprenant :
(a) la préparation d'éléments de batterie (210) et la disposition des éléments de batterie (210) de telle sorte que des fils d'électrode (211) s'étendent à travers des fentes (231) d'une barre omnibus (230) ;
(b) la disposition de la partie de pliage (222, 322, 422) de l'appareil de pliage et de soudage de fil d'électrode (220, 320) au niveau d'une première surface (211a) de chacun des fils d'électrode (211) ;
l'appareil de pliage et de soudage de fil d'électrode (220, 320) est déplacé vers le bas,
la partie de détection (223, 323, 423) de l'appareil de pliage et de soudage de fil d'électrode (220, 320) s'étend à travers chacune des fentes (231) de la barre omnibus (230) de manière à être parallèle à une direction dans laquelle les fils d'électrode (211) font saillie, et
la surface inférieure (222a, 322a) de la partie de pliage (222, 322, 422) de l'appareil de pliage et de soudage de fil d'électrode (220, 320) est disposée de manière à être adjacente à la barre omnibus (230) ;
(c) le pliage des fils d'électrode (211) en disposant la partie de pliage (222, 322, 422) sur une première surface (211a) de chacun des fils d'électrode (211) et en déplaçant horizontalement la partie de pliage (222, 322, 422) de telle sorte qu'une seconde surface, qui est une surface opposée à la première surface (211a), fasse face à la barre omnibus (230) parallèlement à celle-ci ; et
(d) le soudage des fils d'électrode (211) pliés à la barre omnibus (230).

8. Procédé de soudage de fil d'électrode selon la revendication 7, comprenant en outre le fait de déterminer si un état plié de chacun des fils d'électrode (211) est mauvais avant l'étape (d).

9. Procédé de soudage de fil d'électrode selon la revendication 7, dans lequel la partie de détection (223, 323, 423) de l'appareil de pliage et de soudage de fil d'électrode (220, 320) est tournée de 90 degrés dans une première direction de manière à être située au niveau d'une surface extérieure de la barre omnibus (230) en réponse à un déplacement horizontal de la partie de pliage (222, 322, 422), et
dans lequel, après l'étape (d), la partie de détection (223, 323, 423) est tournée de 90 degrés dans une seconde direction, qui est une direction opposée à la première direction, tout en s'éloignant de la barre omnibus (230), moyennant quoi la partie de détection (223, 323, 423) revient à un état de veille.

10. Procédé de soudage de fil d'électrode selon la revendication 7, dans lequel un angle entre la partie de détection (223, 323, 423) et la surface inférieure (222a, 322a) de la partie de pliage (222, 322, 422) est mesuré avec une caméra de vision configurée pour inspecter un état soudé entre le fil d'électrode (211) et la barre omnibus (230), pour déterminer si un état plié du fil d'électrode (211) est mauvais.

11. Procédé de soudage de fil d'électrode selon la revendication 7, dans lequel un angle entre la partie de détection (223, 323, 423) et la barre omnibus (230) est mesuré avec une caméra de vision configurée pour inspecter un état soudé entre le fil d'électrode (211) et la barre omnibus (230), pour déterminer si un état plié du fil d'électrode (211) est mauvais.
